# EUROPÄISCHE PATENTSCHRIFT

(11) **EP 3 792 505 B1**
(45) Veröffentlichungstag und Bekanntmachung des Hinweises auf die Patenterteilung: **12.07.2023**
(21) Anmeldenummer: 19197260.3
(22) Anmeldetag: 13.09.2019
(51) Int. Cl.: F16B 5/02, F16B 13/08, E03C 1/32, E03D 11/14

(54) **GEWINDEEINHEIT FÜR EINE SANITÄRE MONTAGESTRUKTUR**
THREADED UNIT FOR A SANITARY MOUNTING STRUCTURE
UNITÉ DE FILETAGE POUR UNE STRUCTURE DE MONTAGE SANITAIRE

(43) Veröffentlichungstag der Anmeldung: 17.03.2021
(73) Patentinhaber: Geberit International AG, 8645 Jona (CH)
(72) Erfinder: BÄNZIGER, David, 8636 Wald (CH); KOSARNIG, Rolf, 8630 Rüti (CH)
(74) Vertreter: Frischknecht, Harry Ralph

(56) Entgegenhaltungen:
- EP-A1- 3 404 152
- US-A1- 2019 264 720

## Beschreibung

### TECHNISCHES GEBIET

Die vorliegende Erfindung betrifft eine Gewindeeinheit für eine sanitäre Montagestruktur nach Anspruch 1, eine sanitäre Montagestruktur nach Anspruch 14 und Verfahren zur Montage der sanitären Montagestruktur nach Anspruch 17.

### STAND DER TECHNIK

Aus der EP 3 428 353 ist eine Wandhalterung für einen Sanitärartikel bekannt geworden. Die Wandhalterung umfasst ein Ankerelement zur Befestigung an eine Wand, eine Gewindestange und ein Gewindeelement, welches mit einem Montagerahmen verbindbar ist.

Die EP 3 404 152 offenbart ebenfalls eine Wandhalterung für einen Sanitärartikel, wobei hier das Gewindeelement durch ein Steckteil zum Montagerahmen fixiert wird.

Die Montage der aus dem Stand der Technik bekannt gewordenen Wandhalterungen an einen Montagerahmen ist vielfach kompliziert. Bei der technischen Lehre der EP 3 404 152 muss ein entsprechendes Steckteil eingesetzt werden, was den Montageaufwand erhöht. Dies unabhängig davon, ob die Montage werkseitig oder auf der Baustelle vor Ort erfolgt.

### DARSTELLUNG DER ERFINDUNG

Ausgehend von diesem Stand der Technik liegt der Erfindung eine Aufgabe zugrunde, eine Gewindeeinheit für eine sanitäre Montagestruktur anzugeben, welche die Nachteile des Standes der Technik überwindet. Eine besonders bevorzugte Aufgabe ist es, eine Gewindeeinheit anzugeben, welche einfacher ausgebildet ist; insbesondere welche handhabbar ist.

Diese bevorzugte Aufgabe löst der Gegenstand von Anspruch 1. Demgemäss umfasst eine Gewindeeinheit für eine sanitäre Montagestruktur
eine sich entlang einer Mittelachse erstreckende Schraube mit einem Gewindeabschnitt, einem Lagerabschnitt und einem Betätigungsabschnitt,
ein Lagerelement mit einer Lageröffnung, in welcher die Schraube mit dem Lagerabschnitt um die Mittelachse drehbar und von einer ersten Position in eine zweite Position verschiebbar gelagert ist, und
mindestens ein am Lagerelement im Wesentlichen fest gelagertes Klemmelement mit mindestens einem Klemmabschnitt zur klemmenden Befestigung des Lagerelements an einer Montagestruktur.

Der mindestens eine Klemmabschnitt ist durch das Verschieben der Schraube von der ersten Position in die zweite Position radial zur Mittelachse nach aussen von einer Montageposition, in welcher die Gewindeeinheit relativ zur Montagestruktur verschiebbar ist, in eine Klemmposition, in welcher die Gewindeeinheit zur Montagestruktur fest klemmbar ist, bewegbar.

Durch die Zusammenwirkung zwischen der Schraube und dem mindestens einen Klemmabschnitt kann eine einfache Klemmstruktur zwischen der Gewindeeinheit und der sanitären Montagestruktur bereitgestellt werden. Insbesondere kann eine einfache Klemmstruktur bereitgestellt werden ohne dass zusätzliche Elemente anzuordnen wären.

Durch die Klemmung der Gewindeeinheit an der Montagestruktur ergeht zudem der Vorteil, dass weitergehende Montageschritte einfach und ohne Zuhilfenahme von weiteren Installateuren durch eine Person ausgeführt werden können.

Unter der Ausdrucksweise "fest geklemmt bzw. fest klemmbar" wird verstanden, dass die Gewindeeinheit als solches mit dem Lagerelement mechanisch fest und vorzugsweise spielfrei mit der Montagestruktur verbunden ist. Es handelt sich um eine mechanische Klemmung. Nach erfolgter Verbindung lässt sich die Schraube bezüglich des Lagerelementes drehen.

Die Schraube wirkt typischerweise auf ein Ankerelement mit einem Innengewinde, in welches die Schraube eingreift, wobei das Ankerelement fest mit Gebäude verbindbar ist. Das Ankerelement kann verschiedenartig ausgebildet sein. Beispielsweise als Platte oder als Dübel. Über die Verbindung von der Ankerplatte über die Gewindeeinheit zur Montagestruktur kann die Montagestruktur zum Gebäude in seiner Lage ausgerichtet und befestigt werden.

Vorzugsweise ist das Klemmelement und die Schraube aus einem metallischen Werkstoff, während das Lagerelement vorzugsweise aus Kunststoff ist.

Der Betätigungsabschnitt umfasst eine Struktur, mit welcher die Schraube mittels eines Werkzeuges betätigt werden kann. Beispielhaft sei hier ein Innensechskant, ein Schlitz oder ein Kreuzschlitz genannt. Andere Strukturen sind auch denkbar. Der Betätigungsabschnitt ist von ausserhalb des Lagerelements zugänglich.

Vorzugsweise sind bezüglich der Mittelachse gesehen mindestens gegenüberliegende zueinander angeordnete Klemmabschnitte vorhanden. Bevorzugterweise sind vier Klemmabschnitte vorhanden. In anderen Varianten kann auch nur ein Klemmabschnitt vorhanden sein.

Weiter weist der Lagerabschnitt einen konischen Flächenbereich auf, welcher derart auf den mindestens einen Klemmabschnitt wirkt, dass der mindestens eine Klemmabschnitt bei Verschieben der Schraube von der ersten Position in die zweite Position von der Montageposition in die Klemmposition bewegbar ist.

Mit dem konischen Flächenbereich kann beim Vorschieben der Schraube in die zweite Position eine zuverlässige Verschiebung des mindestens einen Klemmabschnittes erreicht werden.

Der konische Flächenbereich ist vorzugsweise um die Mittelachse umlaufend ausgebildet. Durch die Relativverschiebung bei der Bewegung der Schraube von der ersten Position in die zweite Position erfolgt eine Relativverschiebung zwischen dem konischen Flächenbereich und den Klemmabschnitten, wobei der konische Flächenbereich die Klemmabschnitte von der Mittelachse gesehen radial nach aussen drückt.

Ausgehend von der ersten Position nimmt der auf das mindestens eine Klemmelement wirkende Durchmesser des konischen Flächenbereichs mit zunehmenden Vorschub der Schraube zu und erreicht dann den maximalen Durchmesser, wenn die Schraube in der zweiten Position ist.

Vorzugsweise schliesst sich dem konischen Flächenbereich ein zylindrischer Flächenbereich mit konstantem Durchmesser an, wobei der mindestens eine Klemmabschnitt in der zweiten Position mindestens teilweise auf dem zylindrischen Flächenbereich zu liegen kommt.

Durch das Aufliegen auf dem zylindrischen Flächenbereich ergeht der Vorteil, dass die Klemmabschnitte sicher gelagert sind und ihrer Klemmposition verharren.

Vorzugsweise weist der Lagerabschnitt der Schraube einen zylindrischen Lagerbereich auf, mit welchem die Schraube in der Lageröffnung gelagert ist.

Der zylindrische Lagerbereich weist vorzugsweise einen konstanten Durchmesser auf.

Vorzugsweise weist der Lagerabschnitt der Schraube weiter eine um die Mittelachse umlaufende Ausnehmung auf, wobei mindestens ein bezüglich seiner Position fest zum Lagerelement liegendes Rastelement in die Ausnehmung eingreift, wenn die Schraube in der zweiten Position liegt. Hierdurch wird die Schraube zum Lagerelement bezüglich einer Verschiebbarkeit entlang der Mittelachse gesichert. Je nach Ausführungsform kann das Rastelement Teil des Lagerelementes oder Teil des Klemmelementes sein.

Der Eingriff des Rastelements ist derart, dass die Schraube bezüglich einer Bewegung entlang der Mittelachse festgesetzt wird. Durch die umlaufende Ausnehmung kann die Schraube weiterhin um die Mittelachse verschwenkt werden. Das heisst, die Schraube lässt sich drehen, wenn der mindestens eine Klemmabschnitt

Die Ausdrucksweise, dass das Rastelement fest zum Lagerelement liegt ist so zu verstehen, dass das Rastelement entweder Teil vom Lagerelement ist oder dass das Rastelement durch ein weiteres Element bereitstellt wird, welches mit dem Lagerelement in Verbindung steht. Besonders bevorzugt kann das Rastelement Teil vom Klemmelement sein.

Vorzugsweise weist der mindestens eine Klemmabschnitt ein freies Ende auf. Am freien Ende ist eine Rastnase angeordnet. Das Lagerelement und/oder das Klemmelement weisen eine Anschlagsfläche auf, wobei zwischen Rastnase und Anschlagsfläche ein Zwischenraum gebildet wird, in welchen eine Wandung der Montagestruktur aufnehmbar ist.

Hierdurch wird das mindestens eine Klemmelement fest am Lagerelement gelagert.

Das freie Ende und die Rastnase erstrecken sich aus der Lageröffnung und ragen vorzugsweise aus der Lageröffnung hervor.

Vorzugsweise ist der Klemmabschnitt elastisch federnd ausgebildet ist, wobei bei einer Bewegung der Schraube von der zweiten Position in die erste Position der Klemmabschnitt von der Klemmposition in die Montageposition bewegt wird. Hierdurch kann die Demontage der Gewindeeinheit sichergestellt werden.

Vorzugsweise weist das Klemmelement einen um die Mittelache umlaufender Hülsenabschnitt aufweist, von welchem sich stirnseitig der mindestens eine Klemmabschnitt wegerstreckt, wobei das Klemmelement mit dem Hülsenabschnitt mit dem Lagerelement in Kontakt ist bzw. zum Lagerelement gelagert ist.

In einer ersten Ausführungsform ist Klemmelement mit dem Hülsenabschnitt in der Lageröffnung gelagert.

Vorzugsweise weist das Klemmelement nach der ersten Ausführungsform einen Einrastabschnitt auf, welcher vom Hülsenabschnitt radial nach aussen ragt und in eine am Lagerelement angeordnete Rastaufnahme eingreift, derart, dass das Klemmelement bezüglich einer Bewegung entlang der Mittelachse fest am Lagerelement gelagert ist.

In der ersten Ausführungsform ist das die Schraube bezüglich der Bewegung entlang der Mittelachse sichernde Rastelement vorzugsweise Teil des Klemmelementes und erstreckt sich vom Hülsenabschnitt radial nach innen. In der ersten Ausführungsform ist das Rastelement Teil des Klemmelements. Alternativerweise kann das Rastelement auch Teil des Lagerelementes sein.

Nach einer zweiten Ausführungsform umgreift der Hülsenabschnitt das Lagerelement aussenseitig mindestens teilweise. Dieses Umgreifen weist den Vorteil auf, dass eine aussenseitige Lagerung bereitstellbar ist, welche für den Installateur einsehbar ist.

In der zweiten Ausführungsform ist das die Schraube bezüglich der Bewegung entlang der Mittelachse sichernde Rastelement vorzugsweise Teil des Lagerelementes und erstreckt sich von der Lageröffnung radial nach innen.

In einer dritten und vierten Ausführungsform ist das mindestens eine Klemmelement mit seinen Klemmabschnitten verschwenkbar am Lagerelement gelagert.

Vorzugsweise weist das Lagerelement gemäss allen Ausführungsformen aussenseitig eine Lagerfläche auf, mit welcher das Lagerelement in einer Durchgangsöffnung einer Montagestruktur gelagert wird.

Eine Montagestruktur umfasst mindestens eine Gewindeeinheit nach obiger Beschreibung und mindestens ein Montageprofil mit einer Durchgangsöffnung, wobei der mindestens eine Klemmabschnitt eine Klemmwirkung im Bereich der Durchgangsöffnung bereitstellt.

Vorzugsweise ist der mindestens eine Klemmabschnitt in der Montagelage derart positioniert, dass dieser durch die Durchgangsöffnung geführt werden kann. Die maximale Ausdehnung der Klemmabschnitte radial zur Mittelachse ist demnach kleiner als der Innendurchmesser der Durchgangsöffnung. Nach erfolgtem Verschieben der Schraube in die zweite Lage vergrössert sich auch die maximale Ausdehnung der Klemmabschnitte.

Vorzugsweise ist das Montageprofil ein Hohlprofil mit Profilwänden, wobei die Durchgangsöffnung durch zwei gegenüberliegende Profilwände sich hindurch erstreckt, wobei die Gewindeeinheit mit dem Gewindeabschnitt der Schraube voran durch beide Durchgangsöffnungen hindurch geführt wird, und wobei der Klemmabschnitt eine Klemmwirkung im Bereich einer der beiden Durchgangsöffnungen bereitstellt. Das Montageprofil kann aber ein offenes Profil oder ein Blech, insbesondere ein Blechstreifen, sein.

Ein Verfahren zur Montage einer Montagestruktur nach obiger Beschreibung ist dadurch charakterisiert,
dass in einem ersten Schritt die Gewindeeinheit mit dem Lagerelement in der Durchgangsöffnung positioniert wird,
dass in einem zweiten Schritt die Schraube von der ersten Lage in die zweite Lage bewegt wird, wobei durch die Bewegung der Schraube der mindestens eine Klemmabschnitt des mindestens einen Klemmelements von der Montageposition in die Klemmposition bewegt wird.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1a: eine perspektivische Ansicht einer Gewindeeinheit für eine sanitäre Montagestruktur nach einer ersten Ausführungsform;
- Fig. 1b: eine perspektivische Schnittdarstellung der Gewindeeinheit nach Figur 1a in einer Montageposition;
- Fig. 1c: eine perspektivische Schnittdarstellung der Gewindeeinheit nach Figur 1a in einer Klemmposition;
- Fig. 2a: eine perspektivische Ansicht einer Gewindeeinheit für eine sanitäre Montagestruktur nach einer zweiten Ausführungsform;
- Fig. 2b: eine perspektivische Schnittdarstellung der Gewindeeinheit nach Figur 2a in einer Montageposition;
- Fig. 2c: eine perspektivische Schnittdarstellung der Gewindeeinheit nach Figur 2a in einer Klemmposition;
- Fig. 3a: eine perspektivische Ansicht einer Gewindeeinheit für eine sanitäre Montagestruktur nach einer dritten Ausführungsform;
- Fig. 3b: eine perspektivische Schnittdarstellung der Gewindeeinheit nach Figur 3a in einer Montageposition;
- Fig. 3c: eine perspektivische Schnittdarstellung der Gewindeeinheit nach Figur 3a in einer Klemmposition;
- Fig. 4a: eine perspektivische Schnittdarstellung einer Gewindeeinheit für eine sanitäre Montagestruktur nach einer vierten Ausführungsform in einer Montageposition;
- Fig. 4b: eine perspektivische Schnittdarstellung der Gewindeeinheit nach Figur 4a in einer Klemmposition;
- Fig. 5a: eine perspektivische Schnittdarstellung einer Gewindeeinheit für eine sanitäre Montagestruktur nach einer fünften Ausführungsform in einer Montageposition;
- Fig. 5b: eine perspektivische Schnittdarstellung der Gewindeeinheit nach Figur 4a in einer Zwischenposition; und
- Fig. 5c: eine perspektivische Schnittdarstellung der Gewindeeinheit nach Figur 4a in einer Klemmposition.

### BESCHREIBUNG BEVORZUGTER AUSFÜHRUNGSFORMEN

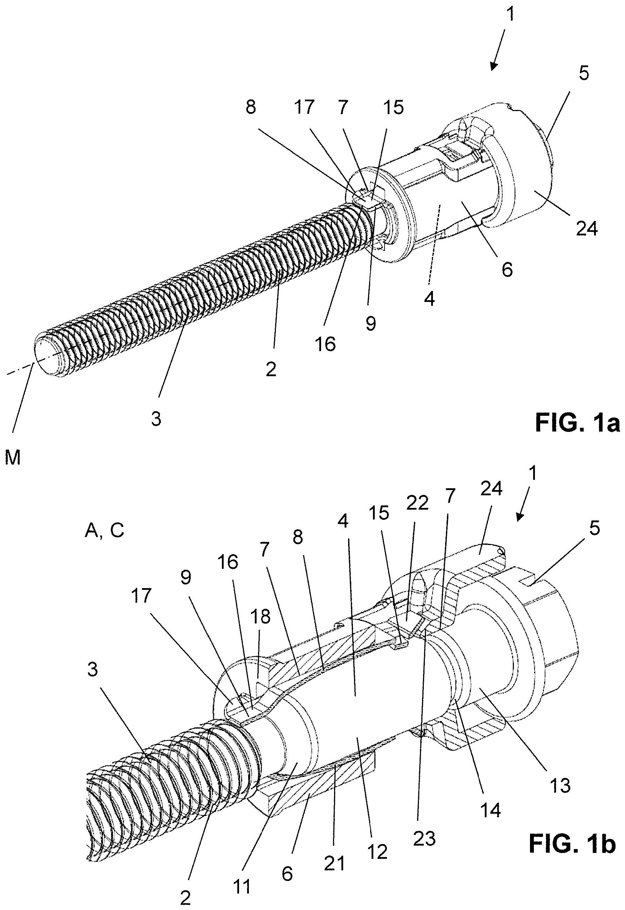

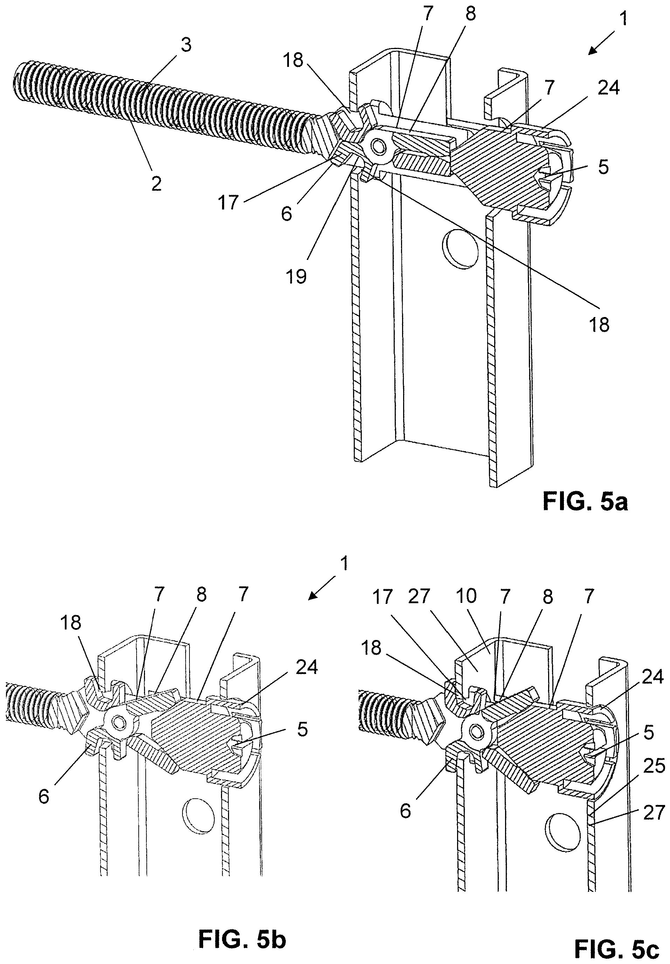

In den Figuren 1a bis 5c wird eine Gewindeeinheit 1 für eine sanitäre Montagestruktur 10 gezeigt. Die Gewindeeinheit 1 dient im Wesentlichen dazu, eine Montagestruktur 10, wie beispielsweise ein Montagegestell, an einer Wand zu sichern. Dabei wird die Gewindeeinheit 1 mit der Montagestruktur 10 verbunden und anschliessend mit einem Befestigungselement, das bereits an einer Wand montiert ist, verbunden. Ein derartiges Befestigungselement kann ein Dübel oder ein Wandanker sein, welche in den Figuren nicht gezeigt sind. Die Montagestruktur dient im Wesentlichen der Lagerung eines Sanitärartikels, wie eine Toilette oder ein Waschtisch.

In den Figuren werden fünf verschiedene Ausführungsformen der erfindungsgemässen Gewindeeinheit 1 gezeigt. Die Gewindeeinheit 1 umfasst dabei eine Schraube 2 mit einer Mittelachse M, einem Gewindeabschnitt 3, einem Lagerabschnitt 4 und einem Betätigungsabschnitt 5. Weiter umfasst die Gewindeeinheit 1 ein Lagerelement 6 mit einer Lageröffnung 7, in welcher die Schraube 2 mit dem Lagerabschnitt 4 um die Mittelachse M drehbar und von einer ersten Position A in eine zweite Position B entlang der Mittelachse M verschiebbar gelagert ist. Weiter umfasst die Gewindeeinheit 1 mindestens ein Lageelement 6 und ein am Lagerelement fest gelagertes Klemmelement 8 mit mindestens einem Klemmabschnitt 9 zur klemmenden Befestigung des Lagerelementes 6 an einer Montagestruktur 10.

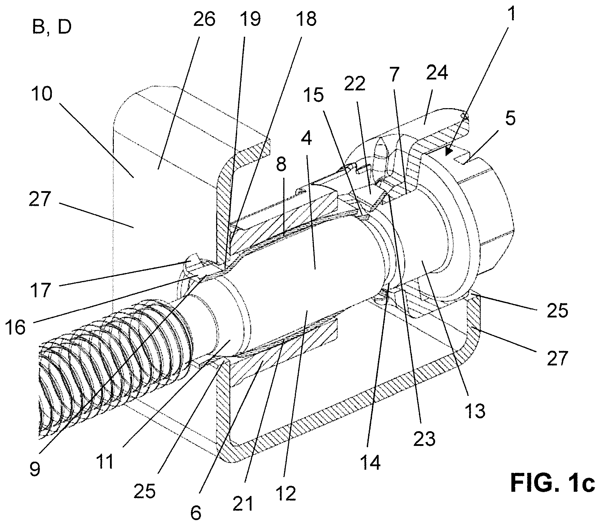

In den Figuren 1b, 2b, 3b, 4a und 5a liegt die Schraube 2 jeweils in ihrer ersten Position A. Ausgehend von dieser ersten Position A ist die Schraube 2 in eine zweite Position B verschiebbar. Die zweite Position B wird in den Figuren 1c, 2c, 3c, 4b und 5c gezeigt. Bei der Verschiebung von der ersten Position A in die zweite Position B wird die Schraube 2 entlang der Mittelachse M verschoben. Es handelt sich dabei um eine translatorische Bewegung in Richtung bzw. entlang der Mittelachse M. Der mindestens eine Klemmabschnitt 9 wird dabei durch das Verschieben der Schraube 2 von der ersten Position A in die zweite Position B radial zur Mittelachse M nach aussen bewegt. Dabei bewegt sich der Klemmabschnitt 9 von einer Montageposition C, welche in den Figuren 1b, 2b, 3b, 4a und 5a gezeigt ist, in eine Klemmposition B, welche in den Figuren 1c, 2c, 3c, 4b und 5c gezeigt ist. In der Montageposition C kann die Gewindeeinheit 1 in eine Durchgangsöffnung 25 an der Montagestruktur 10 eingesetzt werden. In der Klemmposition D wird die Gewindeeinheit 1 zur Montagestruktur 10 mechanisch fest geklemmt. Hierzu wird der mindestens eine Klemmabschnitt 9 radial zur Mittelachse nach aussen gedrückt und verklemmt sich im Bereich der Durchgangsöffnung 25 mit der Montagestruktur 10.

Vorzugsweise sind mindestens zwei Klemmabschnitte 9 vorhanden. Die Klemmabschnitte 9 sind vorzugsweise in gleichen Abständen um die Mittelachse verteilt angeordnet.

In allen Ausführungsformen weist der Lagerabschnitt 4 einen konischen Flächenbereich 11 auf. Der konische Flächenbereich 11 wirkt dabei derart auf den mindestens einen Klemmabschnitt 8, dass der mindestens eine Klemmabschnitt 8 bei Verschieben der Schraube 2 von der ersten Position A in die zweite Position B von der Montageposition C in die Klemmposition D bewegbar ist. Von der Figur 1b, 2b, 3b, 4a und 5a kann gut erkannt werden, dass ein konischer Flächenbereich 11 innenseitig am mindestens einen Klemmabschnitt 8 anliegt. Bei einem Vorschieben der Schraube 2 von der ersten Position A in die zweite Position B wird auch der konischer Flächenbereich 11 vorgeschoben und der auf den mindestens einen Klemmabschnitt 8 wirkende Aussendurchmesser des konischen Flächenbereichs 11 vergrössert sich mit zunehmenden Vorschub, wobei gleichzeitig der mindestens eine Klemmabschnitt 8 radial zur Mittelachse nach aussen gedrückt wird, so wie dies in den Figuren 1 c, 2c, 3c, 4b und 5c gezeigt ist. Diese Ausbildung hat den Vorteil, dass die Gewindeeinheit 1 mit den Klemmabschnitt 9 durch die Durchgangsöffnung 25 hindurchgeführt werden kann und dass auf dem rückseitigen Ende der Durchgangsöffnung 25 die entsprechende Klemmabschnitte 9 radial nach aussen über den Durchmesser der Durchgangsöffnung 25 bewegbar sind.

Dem konischen Flächenbereich 11 schliesst sich in den gezeigten Ausführungsformen ein zylindrischer Flächenbereich 12 mit konstantem Durchmesser an. Der mindestens eine Klemmabschnitt 9 liegt in der zweiten Position B mindestens teilweise auf dem zylindrischen Flächenbereich 12. Das heisst, der mindestens eine Klemmabschnitt 9 kommt auf einen determinierten Durchmesser zu liegen.

Der Lagerabschnitt 4 der Schraube 2 weist einen zylindrischen Lagerbereich 13 auf, mit welchem die Schraube 2 in der Lageröffnung 7 gelagert ist. Der zylindrische Lagerbereich 13 schliesst sich in den gezeigten Ausführungsformen jeweils dem Betätigungsabschnitt 5 an.

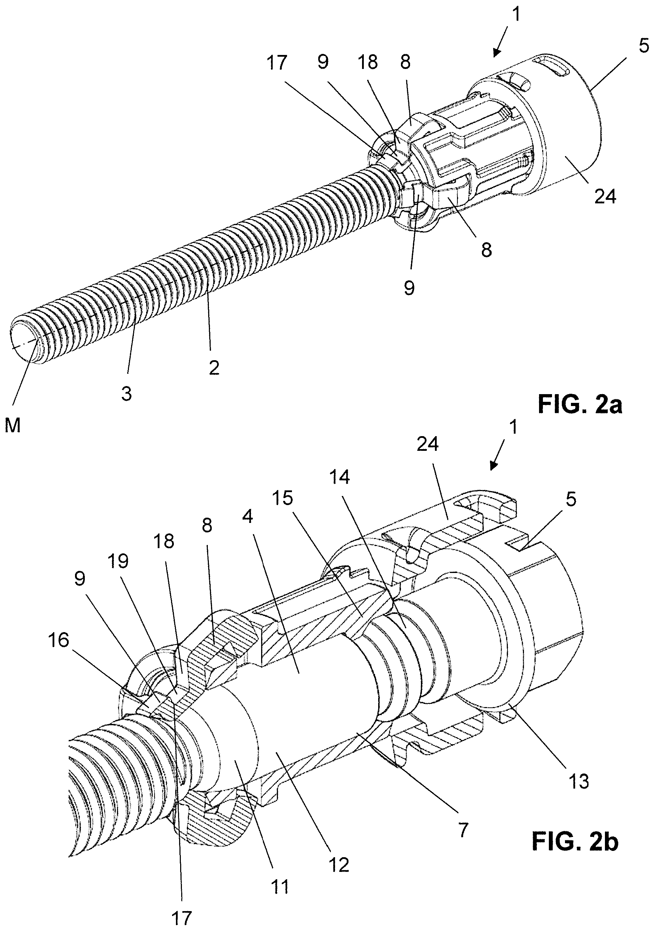

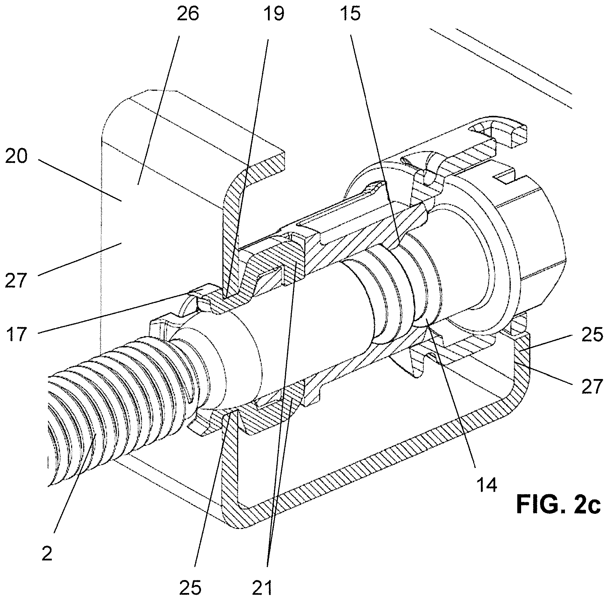

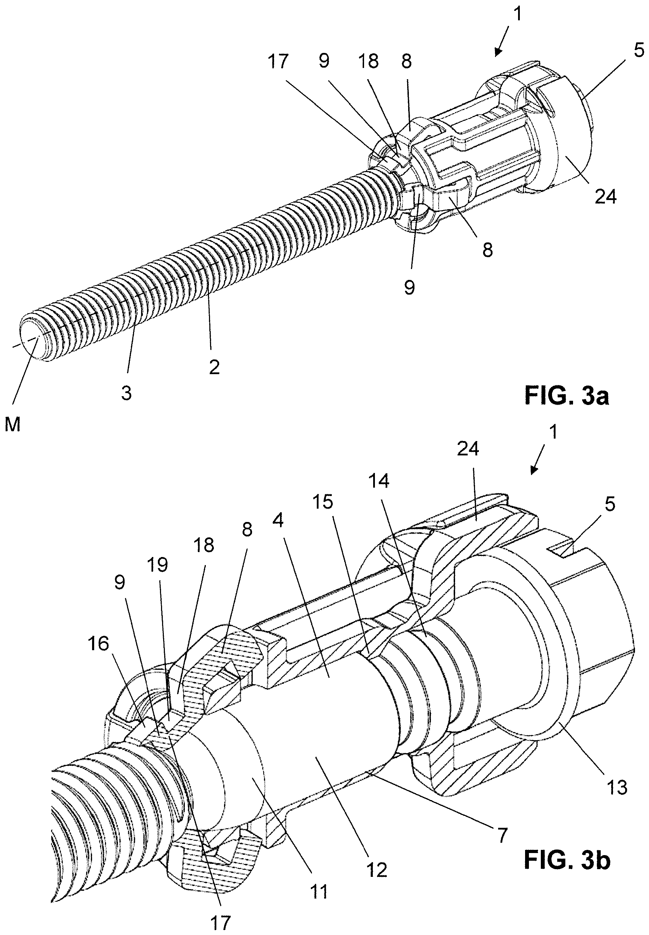

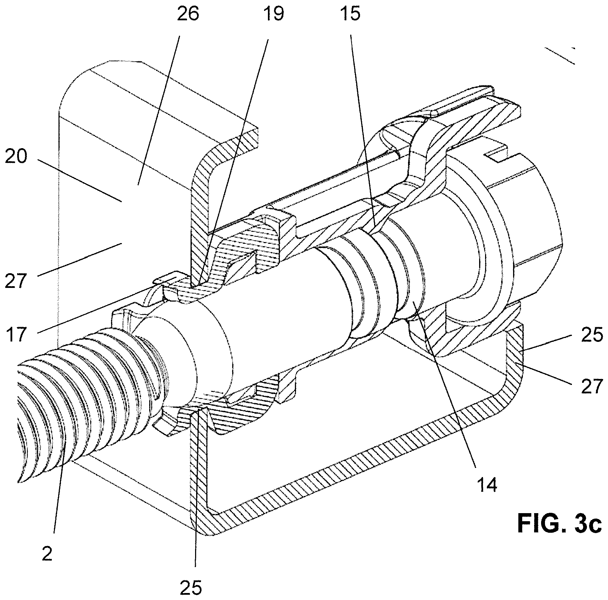

Weiter weist der Lagerabschnitt 4 eine um die Mittelachse M umlaufende Ausnehmung 14 auf. Die Ausnehmung 14 arbeitet mit einem Rastelement 15 zusammen. Das Rastelement 15 greift dabei in die Ausnehmung 14 ein, wenn die Schraube 2 in der zweiten Position B liegt. Das Rastelement 15 ist in seiner Position fest zum Lagerelement 6 positioniert. Bezüglich des Rastelementes 15 sind verschiedene Varianten denkbar. Gemäss der ersten Variante, welche in den Figuren 1a bis 1c gezeigt wird, ist das Rastelement 15 Teil des Klemmelementes 8, welches seinerseits fest zum Lagerelement 6 montiert ist. Dabei greift das Rastelement 15 radial von aussen her in die umlaufende Ausnehmung 14 der Schraube 2 ein. Dieser Eingriff wird in der Figur 1c genauer gezeigt. Gemäss einer zweiten Variante, welche in den Figuren 2a bis 3c gezeigt wird, ist das Rastelement 15 integraler Bestandteil des Lagerelementes 6 und ragt radial von aussen her in die Lageröffnung 7 ein. Der Eingriff in die umlaufende Ausnehmung 14 wird in der Figur 2c und 3c gezeigt.

In allen Ausführungsformen weist der mindestens eine Klemmabschnitt 9 ein freies Ende 16 auf. Am freien Ende 16 ist eine Rastnase 17 angeordnet. Das Lagerelement 6 und/oder das Klemmelement 8 weisen jeweils eine Anschlagsfläche 18 auf. Zwischen der Rastnase 17 und der Anschlagsfläche 18 wird ein Zwischenraum 19 gebildet, in welchem eine Wandung 20 der Montagestruktur 10 aufnehmbar ist.

In der ersten Ausführungsform gemäss den Figuren 1a bis 1c ist die Anschlagsfläche 18 Teil des Lagerelementes 6. Die Anschlagsfläche 18 bildet dabei die vordere Stirnseite des Lagerelements 6. Der mindestens eine Klemmabschnitt 9 ragt dabei mit seinem freien Ende 16 und der Rastnase 17 aus der Lageröffnung 7 über die vordere Stirnseite 18 hinaus.

In den anderen Ausführungsformen gemäss Figuren 2a bis 5c wird die Anschlagsfläche 18 durch das Klemmelement 8 selbst gebildet. Hierfür weist der mindestens eine Klemmabschnitt 9 eine entsprechende Anschlagsfläche 18 auf.

In den Ausführungsformen gemäss den Figuren 1a bis 3c ist der mindestens eine Klemmabschnitt 9 elastisch federnd ausgebildet. Bei der Bewegung der Schraube 2 von der zweiten Position B in die erste Position A wird der Klemmabschnitt 9 von der Klemmposition B in die Montageposition C zurückbewegt. Diese elastische verformbare Federung ist dabei vorteilhaft, wenn es um die Demontage der Gewindeeinheit 1 von der Montagestruktur 10 geht.

Nach der ersten, der zweiten und der dritten Ausführungsform weist das Klemmelement 8 einen um die Mittelachse M umlaufenden Hülsenabschnitt 21 auf. Vom Hülsenabschnitt 21 erstreckt sich jeweils stirnseitig der mindestens eine Klemmabschnitt 9 weg. Das Klemmelement 8 steht mit dem Hülsenabschnitt 21 mit dem Lagerelement 6 in Kontakt bzw. ist zum Lagerelement 6 gelagert.

In der ersten Ausführungsform gemäss den Figuren 1a bis 1c ist das Klemmelement 9 mit dem Hülsenabschnitt 21 in der Lageröffnung 7 gelagert. Weiter weist das Klemmelement 8 einen Einrastabschnitt 22 auf, welcher vom Hülsenabschnitt 21 radial nach aussen ragt und in eine am Lagerelement 6 angeordnete Rastaufnahme 23 eingreift. Der Eingriff ist dabei derart, dass das Klemmelement 8 bezüglich einer Bewegung entlang Mittelachse M fest am Lagerelement 6 gelagert ist. Über diesen Eingriff wird das Klemmelement 8 zum Lagerelement 6 gesichert. Ebenfalls am Hülsenabschnitt 20 ist das die Schraube 2 bezüglich der Bewegung entlang der Mittelachse M sichernde Rastelement 15 angeordnet. Das Rastelement 15 ragt dabei radial vom Hülsenabschnitt 20 zur Mittelachse M ab.

In der gezeigten Ausführungsform gemäss den Figuren 1a bis 1c erstreckt sich zudem die Schraube 2 durch den Hülsenabschnitt 21.

Nach der zweiten Ausführungsform und der dritten Ausführungsform weist der Hülsenabschnitt 21 einen Durchmesser auf, welcher das Lagerelement 6 aussenseitig mindestens teilweise umgreift. Durch dieses Umgreifen ist der Hülsenabschnitt 21 am Lagerelement 6 fest gelagert. Das Lagerelement 6 weist dabei aussenseitig entsprechende Strukturen auf, an welchen der Hülsenabschnitt 21 gelagert ist. Vom Hülsenabschnitt 21 steht der mindestens eine Klemmabschnitt 9 in Richtung der Mittelachse M axial ab. Diese Klemmabschnitte 9 sind dann entsprechend elastisch verformbar.

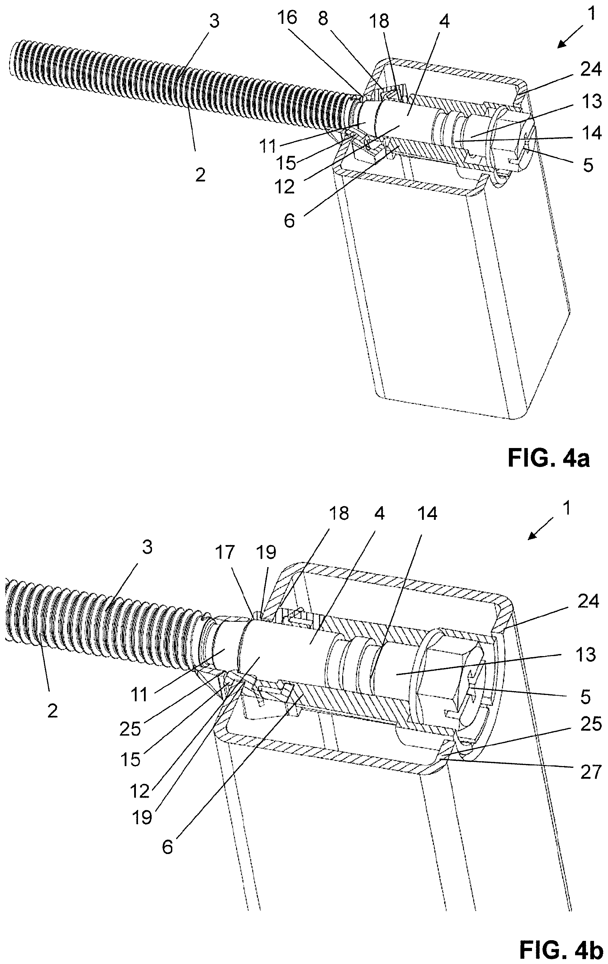

Bei den Ausführungsformen gemäss den Figuren 4a bis 5c das mindestens eine Klemmelement 8 mit seiner Klemmabschnitten 9 verschwenkbar am Lagerelement gelagert. Gemäss der vierten Ausführungsform liegen die Klemmelemente aussenseitig zum Lagerelement 6. In der fünften Ausführungsform sind die Klemmelemente 8 um eine Achse verschwenkbar angeordnet.

In allen Ausführungsformen weist das Lagerelement 6 aussenseitig eine Lagerfläche 24 auf. Mit der Lagerfläche 24 kann das Lagerelement 6 in eine Durchgangsöffnung 25 der Montagestruktur 10 gelagert werden.

Eine sanitäre Montagestruktur 10 umfasst eine Gewindeeinheit 1 nach obiger Beschreibung. Weiter umfasst die sanitäre Montagestruktur 10 mindestens ein Montageprofil 26 mit einer Durchgangsöffnung 25. Das Montageprofil 26 weist dabei zwei beanstandet zu einander liegende Profilwände 27 auf, durch welche sich die Durchgangsöffnung 25 hindurch erstreckt. Der mindestens eine Klemmabschnitt greift dabei an einer Durchgangsöffnung an und an der anderen Durchgangsöffnung liegt das Lagerelement 7 mit der Lagerfläche 24 auf. Die Gewindeeinheit 1 wird mit dem Gewindeabschnitt 3 der Schraube 2 voran durch beide Durchgangsöffnungen 25 hindurchgeführt und der Klemmabschnitt 9 stimmt eine Klemmwirkung im Bereich einer der beiden Durchgangsöffnungen 25 bereit.

### BEZUGSZEICHENLISTE

- 1: Gewindeeinheit
- 2: Schraube
- 3: Gewindeabschnitt
- 4: Lagerabschnitt
- 5: Betätigungsabschnitt
- 6: Lagerelement
- 7: Lageröffnung
- 8: Klemmelement
- 9: Klemmabschnitt
- 10: Montagestruktur
- 11: konischer Flächenbereich
- 12: zylindrischer Flächenbereich
- 13: zylindrischer Lagerbereich
- 14: Ausnehmung
- 15: Rastelement
- 16: freies Ende
- 17: Rastnase
- 18: Anschlagsfläche
- 19: Zwischenraum
- 20: Wandung
- 21: Hülsenabschnitt
- 22: Einrastabschnitt
- 23: Rastaufnahme
- 24: Lagerfläche
- 25: Durchgangsöffnung
- 26: Montageprofil
- 27: Profilwand
- M: Mittelachse

## Patentansprüche

1. Gewindeeinheit (1) für eine sanitäre Montagestruktur (10) umfassend
eine sich entlang einer Mittelachse (M) erstreckende Schraube (2) mit einem Gewindeabschnitt (3), einem Lagerabschnitt (4) und einem Betätigungsabschnitt (5),
ein Lagerelement (6) mit einer Lageröffnung (7), in welcher die Schraube (2) mit dem Lagerabschnitt (4) um die Mittelachse (M) drehbar und von einer ersten Position (A) in eine zweite Position (B) verschiebbar gelagert ist, und
mindestens ein am Lagerelement (6) fest gelagertes Klemmelement (8) mit mindestens einem Klemmabschnitt (9) zur klemmenden Befestigung des Lagerelements (6) an einer Montagestruktur (10),
wobei der mindestens eine Klemmabschnitt (9) durch das Verschieben der Schraube (2) von der ersten Position (A) in die zweite Position (B) radial zur Mittelachse (M) nach aussen von einer Montageposition (C), in welcher die Gewindeeinheit (1) relativ zur Montagestruktur (10) verschiebbar ist, in eine Klemmposition (D), in welcher die Gewindeeinheit (1) zur Montagestruktur (10) fest klemmbar ist, bewegbar ist, und
wobei der Lagerabschnitt (4) einen konischen Flächenbereich (11) aufweist, welcher derart auf den mindestens einen Klemmabschnitt (9) wirkt, dass der mindestens eine Klemmabschnitt(9) bei Verschieben der Schraube (2) von der ersten Position (A) in die zweite Position (B) von der Montageposition (C) in die Klemmposition (D) bewegbar ist.

2. Gewindeeinheit (1) nach Anspruch 1, **dadurch gekennzeichnet, dass** sich dem konischen Flächenbereich (11) ein zylindrischer Flächenbereich (12) mit konstantem Durchmesser anschliesst, wobei der mindestens eine Klemmabschnitt (9) in der zweiten Position (B) mindestens teilweise auf dem zylindrischen Flächenbereich (12) zu liegen kommt.

3. Gewindeeinheit (1) nach einem der vorhergehenden Ansprüche, **dadurch gekennzeichnet, dass** der Lagerabschnitt (4) einen zylindrischen Lagerbereich (13) aufweist, mit welchem die Schraube (2) in der Lageröffnung (7) gelagert ist.

4. Gewindeeinheit (1) nach einem der vorhergehenden Ansprüche, **dadurch gekennzeichnet, dass** der Lagerabschnitt (4) weiter eine um die Mittelachse (M) umlaufende Ausnehmung (14) aufweist, wobei mindestens ein bezüglich seiner Position fest zum Lagerelement (6) liegendes Rastelement (15) in die Ausnehmung (14) eingreift, wenn die Schraube in der zweiten Position (B) liegt.

5. Gewindeeinheit (1) nach einem der vorhergehenden Ansprüche, **dadurch gekennzeichnet, dass** der mindestens eine Klemmabschnitt (9) ein freies Ende (16) aufweist, wobei am freien Ende (16) eine Rastnase (17) angeordnet ist, und dass das Lagerelement (6) und/oder das Klemmelement (8) eine Anschlagsfläche (18) aufweisen, wobei zwischen Rastnase (17) und Anschlagsfläche (18) ein Zwischenraum (19) gebildet wird, in welchen eine Wandung (20) der Montagestruktur (10) aufnehmbar ist.

6. Gewindeeinheit (1) nach einem der vorhergehenden Ansprüche, **dadurch gekennzeichnet, dass** der mindestens eine Klemmabschnitt (9) elastisch federnd ausgebildet ist, wobei bei einer Bewegung der Schraube (2) von der zweiten Position (B) in die erste Position (A) der Klemmabschnitt (9) von der Klemmposition (D) in die Montageposition (C) bewegt wird.

7. Gewindeeinheit (1) nach einem der vorhergehenden Ansprüche, **dadurch gekennzeichnet, dass** das Klemmelement (8) einen um die Mittelache (M) umlaufender Hülsenabschnitt (21) aufweist, von welchem sich stirnseitig der mindestens eine Klemmabschnitt (9) wegerstreckt, wobei das Klemmelement (8) mit dem Hülsenabschnitt (20) mit dem Lagerelement (6) in Kontakt ist bzw. zum Lagerelement (6) gelagert ist.

8. Gewindeeinheit (1) nach Anspruch 7, **dadurch gekennzeichnet, dass** das Klemmelement (8) mit dem Hülsenabschnitt (21) in der Lageröffnung (7) gelagert ist.

9. Gewindeeinheit (1) nach Anspruch 8, **dadurch gekennzeichnet, dass** das Klemmelement (8) einen Einrastabschnitt (22) aufweist, welcher vom Hülsenabschnitt (20) radial nach aussen ragt und in eine am Lagerelement (6) angeordnete Rastaufnahme (23) eingreift, derart, dass das Klemmelement (8) bezüglich einer Bewegung entlang der Mittelachse fest am Lagerelement (6) gelagert ist.

10. Gewindeeinheit nach Anspruch 4 und einem der Ansprüche 7 bis 9, **dadurch gekennzeichnet, dass** das die Schraube (2) bezüglich der Bewegung entlang der Mittelachse (M) sichernde Rastelement (15) Teil des Klemmelementes (8) ist und sich vom Hülsenabschnitt (21) radial nach innen erstreckt.

11. Gewindeeinheit (1) nach einem der vorhergehenden Ansprüche 1 bis 6, **dadurch gekennzeichnet, dass** der Hülsenabschnitt (21) das Lagerelement (6) aussenseitig mindestens teilweise umgreift.

12. Gewindeeinheit (1) nach einem der vorhergehende Ansprüche 1 bis 6, **dadurch gekennzeichnet, dass** das mindestens eine Klemmelement (8) mit seinen Klemmabschnitten (9) verschwenkbar am Lagerelement (6) gelagert ist.

13. Gewindeeinheit (1) nach einem der vorhergehenden Ansprüche, **dadurch gekennzeichnet, dass** das Lagerelement (6) aussenseitig eine Lagerfläche (24) aufweist, mit welcher das Lagerelement (6) in einer Durchgangsöffnung (25) einer Montagestruktur (10) gelagert wird.

14. Sanitäre Montagestruktur (10) umfassend mindestens eine Gewindeeinheit (1) nach einem der vorhergehenden Ansprüche und mindestens ein Montageprofil (26) mit einer Durchgangsöffnung (25), wobei der mindestens eine Klemmabschnitt (9) eine Klemmwirkung im Bereich der Durchgangsöffnung (25) bereitstellt.

15. Sanitäre Montagestruktur (10) nach Anspruch 14, **dadurch gekennzeichnet, dass** der mindestens eine Klemmabschnitt (9) in der Montagelage (D) derart positioniert ist, dass dieser durch die Durchgangsöffnung (25) geführt werden kann.

16. Sanitäre Montagestruktur nach Anspruch 14 oder 15, **dadurch gekennzeichnet, dass** das Montageprofil (26) ein Hohlprofil mit Profilwänden (27) ist, wobei die Durchgangsöffnung (25) durch zwei gegenüberliegende Profilwände (27) sich hindurch erstreckt, wobei die Gewindeeinheit (1) mit dem Gewindeabschnitt (3) der Schraube (2) voran durch beide Durchgangsöffnungen (25) hindurch geführt wird, und wobei der Klemmabschnitt (9) eine Klemmwirkung im Bereich einer der beiden Durchgangsöffnungen (25) bereitstellt.

17. Verfahren zur Montage einer Montagestruktur nach einem der Ansprüche 14 bis 16, **dadurch gekennzeichnet, dass** in einem ersten Schritt die Gewindeeinheit (1) mit dem Lagerelement (6) in der Durchgangsöffnung (26) positioniert wird, dass in einem zweiten Schritt die Schraube (2) von der ersten Lage (A) in die zweite Lage (B) bewegt wird, wobei durch die Bewegung der Schraube (2) der mindestens eine Klemmabschnitt (9) des mindestens einen Klemmelements (8) von der Montageposition (C) in die Klemmposition (D) bewegt wird.

## Claims

1. Threaded unit (1) for a sanitary mounting structure (10), comprising a screw (2) which extends along a central axis (M) and which has a thread portion (3), a bearing portion (4) and an actuation portion (5),
a bearing element (6) with a bearing opening (7), in which bearing opening the screw (2) is mounted by way of the bearing portion (4) so as to be rotatable about the central axis (M) and to be displaceable from a first position (A) into a second position (B), and
at least one clamping element (8) which is mounted fixedly on the bearing element (6) and which has at least one clamping portion (9) for fastening of the bearing element (6) with clamping action to a mounting structure (10),
wherein the at least one clamping portion (9) is movable radially outwards in relation to the central axis (M) from a mounting position (C), in which the threaded unit (1) is displaceable relative to the mounting structure (10), into a clamping position (D), in which the threaded unit (1) is able to be clamped fixedly in relation to the mounting structure (10), by way of displacement of the screw (2) from the first position (A) into the second position (B), and
wherein the bearing portion (4) has a conical surface region (11) which acts on the at least one clamping portion (9) in such a way that the at least one clamping portion (9) is movable from the mounting position (C) into the clamping position (D) during displacement of the screw (2) from the first position (A) into the second position (B).

2. Threaded unit (1) according to Claim 1, **characterized in that** the conical surface region (11) is adjoined by a cylindrical surface region (12) of constant diameter, wherein, in the second position (B), the at least one clamping portion (9) comes to lie at least partially on the cylindrical surface region (12).

3. Threaded unit (1) according to either of the preceding claims, **characterized in that** the bearing portion (4) has a cylindrical bearing region (13) by way of which the screw (2) is mounted in the bearing opening (7).

4. Threaded unit (1) according to one of the preceding claims, **characterized in that** the bearing portion (4) furthermore has a recess (14) which runs in an encircling manner around the central axis (M), wherein at least one latching element (15) which is situated fixedly in its position in relation to the bearing element (6) engages into the recess (14) when the screw is in the second position (B).

5. Threaded unit (1) according to one of the preceding claims, **characterized in that** the at least one clamping portion (9) has a free end (16), wherein a latching nose (17) is arranged on the free end (16), and **in that** the bearing element (6) and/or the clamping element (8) have/has a stop surface (18), wherein, between latching nose (17) and stop surface (18), there is formed an intermediate space (19) into which a wall (20) of the mounting structure (10) is able to be received.

6. Threaded unit (1) according to one of the preceding claims, **characterized in that** the at least one clamping portion (9) is of elastically resilient form, wherein, during a movement of the screw (2) from the second position (B) into the first position (A), the clamping portion (9) is moved from the clamping position (D) into the mounting position (C).

7. Threaded unit (1) according to one of the preceding claims, **characterized in that** the clamping element (8) has a sleeve portion (21) which runs in an encircling manner around the central axis (M), from which sleeve portion the at least one clamping portion (9) extends away at an end face, wherein the clamping element (8) is in contact with the bearing element (6), or is mounted with respect to the bearing element (6), by way of the sleeve portion (20).

8. Threaded unit (1) according to Claim 7, **characterized in that** the clamping element (8) is mounted in the bearing opening (7) by way of the sleeve portion (21).

9. Threaded unit (1) according to Claim 8, **characterized in that** the clamping element (8) has a latch-in portion (22) which projects radially outwards from the sleeve portion (20) and which engages into a latching receptacle (23), arranged on the bearing element (6), in such a way that the clamping element (8) is mounted fixedly on the bearing element (6) in relation to a movement along the central axis.

10. Threaded unit according to Claim 4 and one of Claims 7 to 9, **characterized in that** the latching element (15) securing the screw (2) in relation to movement along the central axis (M) is part of the clamping element (8) and extends radially inwards from the sleeve portion (21).

11. Threaded unit (1) according to one of preceding Claims 1 to 6, **characterized in that** the sleeve portion (21) engages at least partially around the outer side of the bearing element (6).

12. Threaded unit (1) according to one of preceding Claims 1 to 6, **characterized in that** the at least one clamping element (8) is mounted pivotably on the bearing element (6) by way of its clamping portions (9).

13. Threaded unit (1) according to one of the preceding claims, **characterized in that** the bearing element (6) has a bearing surface (24) at the outside, by way of which bearing surface the bearing element (6) is mounted in a passage opening (25) of a mounting structure (10).

14. Sanitary mounting structure (10) comprising at least one threaded unit (1) according to one of the preceding claims and at least one mounting profile (26) with a passage opening (25), wherein the at least one clamping portion (9) provides a clamping action in the region of the passage opening (25).

15. Sanitary mounting structure (10) according to Claim 14, **characterized in that**, in the mounting position (D), the at least one clamping portion (9) is positioned in such a way that it can be guided through the passage opening (25).

16. Sanitary mounting structure according to Claim 14 or 15, **characterized in that** the mounting profile (26) is a hollow profile with profile walls (27), wherein the passage opening (25) extends through two oppositely situated profile walls (27), wherein the threaded unit (1) is guided with the thread portion (3) of the screw (2) in front through both passage openings (25), and wherein the clamping portion (9) provides a clamping action in the region of one of the two passage openings (25).

17. Method for mounting a mounting structure according to one of Claims 14 to 16, **characterized in that**, in a first step, the threaded unit (1) is positioned with the bearing element (6) in the passage opening (26), and **in that**, in a second step, the screw (2) is moved from the first position (A) into the second position (B), wherein the movement of the screw (2) causes the at least one clamping portion (9) of the at least one clamping element (8) to be moved from the mounting position (C) into the clamping position (D).

## Revendications

1. Unité filetée (1) pour une structure de montage sanitaire (10) comprenant une vis (2) s'étendant le long d'un axe central (M) et dotée d'une partie filetée (3), d'une partie de support (4) et d'une partie de fixation (5),
un élément de support (6) doté d'une ouverture de support (7) dans laquelle la vis (2) peut tourner autour de l'axe central (M) par la partie de support (4) et est montée de manière déplaçable d'une première position (A) à une deuxième position (B), et
au moins un élément de serrage (8) monté fixement sur l'élément de support (6) et doté d'au moins une partie de serrage (9) servant à la fixation par serrage de l'élément de support (6) sur une structure de montage (10),
l'au moins une partie de serrage (9) étant mobile par le déplacement de la vis (2) de la première position (A) à la deuxième position (B) radialement par rapport à l'axe central (M) vers l'extérieur d'une position de montage (C), dans laquelle l'unité filetée (1) est déplaçable par rapport à la structure de montage (10), à une position de serrage (D), dans laquelle l'unité filetée (1) peut être serrée fixement par rapport à la structure de montage (10), et
la partie de support (4) présentant une région de surface conique (11), laquelle agit sur l'au moins une partie de serrage (9) de telle sorte que l'au moins une partie de serrage (9) soit mobile de la position de montage (C) à la position de serrage (D) lors du déplacement de la vis (2) de la première position (A) à la deuxième position (B).

2. Unité filetée (1) selon la revendication 1, **caractérisée en ce qu'**une région de surface cylindrique (12) de diamètre constant se raccorde à la région de surface conique (11), l'au moins une partie de serrage (9) venant s'appuyer au moins partiellement sur la région de surface cylindrique (12) dans la deuxième position (B).

3. Unité filetée (1) selon l'une des revendications précédentes, **caractérisée en ce que** la partie de support (4) présente une région de support cylindrique (13) par laquelle la vis (2) est montée dans l'ouverture de support (7).

4. Unité filetée (1) selon l'une des revendications précédentes, **caractérisée en ce que** la partie de support (4) présente en outre un évidement (14) périphérique autour de l'axe central (M), au moins un élément d'encliquetage (15) situé fixement par rapport à l'élément de support (6) en ce qui concerne sa position venant en prise dans l'évidement (14) lorsque la vis se situe dans la deuxième position (B).

5. Unité filetée (1) selon l'une des revendications précédentes, **caractérisée en ce que** l'au moins une partie de serrage (9) présente une extrémité libre (16), un ergot d'encliquetage (17) étant disposé à l'extrémité libre (16), et **en ce que** l'élément de support (6) et/ou l'élément de serrage (8) présente(nt) une surface de butée (18), un espace intermédiaire (19) étant formé entre l'ergot d'encliquetage (17) et la surface de butée (18), espace intermédiaire dans lequel une paroi (20) de la structure de montage (10) peut être reçue.

6. Unité filetée (1) selon l'une des revendications précédentes, **caractérisée en ce que** l'au moins une partie de serrage (9) est réalisée de manière élastique, la partie de serrage (9) étant déplacée de la position de serrage (D) à la position de montage (C) lors d'un mouvement de la vis (2) de la deuxième position (B) à la première position (A).

7. Unité filetée (1) selon l'une des revendications précédentes, **caractérisée en ce que** l'élément de serrage (8) présente une partie douille (21) périphérique autour de l'axe central (M), à partir de laquelle l'au moins une partie de serrage (9) s'écarte du côté frontal, l'élément de serrage (8) étant, par la partie douille (20), en contact avec l'élément de support (6) ou monté par rapport à l'élément de support (6).

8. Unité filetée (1) selon la revendication 7, **caractérisée en ce que** l'élément de serrage (8) est monté dans l'ouverture de support (7) par la partie douille (21).

9. Unité filetée (1) selon la revendication 8, **caractérisée en ce que** l'élément de serrage (8) présente une partie d'encliquetage (22), laquelle fait saillie radialement vers l'extérieur à partir de la partie douille (20) et vient en prise dans un logement d'encliquetage (23) disposé au niveau de l'élément de support (6), de telle sorte que l'élément de serrage (8) soit monté fixement sur l'élément de support (6) en ce qui concerne un mouvement le long de l'axe central.

10. Unité filetée selon la revendication 4 et l'une des revendications 7 à 9, **caractérisée en ce que** l'élément d'encliquetage (15) bloquant la vis (2) en ce qui concerne le mouvement le long de l'axe central (M) fait partie de l'élément de serrage (8) et s'étend radialement vers l'intérieur à partir de la partie douille (21).

11. Unité filetée (1) selon l'une des revendications précédentes 1 à 6, **caractérisée en ce que** la partie douille (21) vient en prise au moins partiellement du côté extérieur autour de l'élément de support (6).

12. Unité filetée (1) selon l'une des revendications précédentes 1 à 6, **caractérisée en ce que** l'au moins un élément de serrage (8) est monté pivotant sur l'élément de support (6) par ses parties de serrage (9).

13. Unité filetée (1) selon l'une des revendications précédentes, **caractérisée en ce que** l'élément de support (6) présente, du côté extérieur, une surface de support (24) par laquelle l'élément de support (6) est monté dans une ouverture traversante (25) d'une structure de montage (10).

14. Structure de montage sanitaire (10) comprenant au moins une unité filetée (1) selon l'une des revendications précédentes et au moins un profilé de montage (26) doté d'une ouverture traversante (25), l'au moins une partie de serrage (9) produisant un effet de serrage dans la région de l'ouverture traversante (25).

15. Structure de montage sanitaire (10) selon la revendication 14, **caractérisée en ce que** l'au moins une partie de serrage (9) est positionnée dans la position de montage (D) de telle sorte que celle-ci peut être guidée à travers l'ouverture traversante (25).

16. Structure de montage sanitaire selon la revendication 14 ou 15, **caractérisée en ce que** le profilé de montage (26) est un profilé creux doté de parois de profilé (27), l'ouverture traversante (25) s'étendant à travers deux parois de profilé (27) se faisant face, l'unité profilée (1) étant guidée à travers les deux ouvertures traversantes (25) avec la partie filetée (3) de la vis (2) en avant, et la partie de serrage (9) produisant un effet de serrage dans la région de l'une des deux ouvertures traversantes (25).

17. Procédé de montage d'une structure de montage selon l'une des revendications 14 à 16, **caractérisé en ce que**, dans une première étape, l'unité filetée (1) est positionnée, par l'élément de support (6), dans l'ouverture traversante (26), **en ce que**, dans une deuxième étape, la vis (2) est déplacée de la première position (A) à la deuxième position (B), l'au moins une partie de serrage (9) de l'au moins un élément de serrage (8) étant déplacée de la position de montage (C) à la position de serrage (D) par le mouvement de la vis (2).
